# EUROPÄISCHE PATENTSCHRIFT

(11) **EP 2 365 938 B1**
(45) Veröffentlichungstag und Bekanntmachung des Hinweises auf die Patenterteilung: **02.08.2017**
(21) Anmeldenummer: 09778825.1
(22) Anmeldetag: 05.10.2009
(51) Int. Cl.: C01B 17/04, B01D 53/14, B01D 53/52, B01D 53/75, B01D 53/77, B01D 53/86, C01B 3/50

(54) **VERFAHREN ZUR ENTSCHWEFELUNG**
METHOD FOR DESULPHURIZATION
PROCÉDÉ DE DÉSULFURISATION

(30) Priorität: 06.10.2008 DE 102008050088
(43) Veröffentlichungstag der Anmeldung: 21.09.2011
(73) Patentinhaber: ThyssenKrupp Industrial Solutions AG, 45143 Essen (DE)
(72) Erfinder: MENZEL, Johannes, 45731 Waltrop (DE); VON MORSTEIN, Olaf, 45149 Essen (DE)
(74) Vertreter: Lorenz, Bernd Ingo Thaddeus
(86) Internationale Anmeldenummer: PCT/EP2009/007119
(87) Internationale Veröffentlichungsnummer: WO 2010/040495

(56) Entgegenhaltungen:
- EP-A1- 0 672 618
- EP-A1- 1 914 294
- WO-A1-2008/103467
- GB-A- 769 995
- US-A- 5 628 977

## Beschreibung

Die Erfindung betrifft ein Verfahren zur Entschwefelung, wobei ein Gasgemisch zur Separation saurer Gaskomponenten einem Abtrennprozess unterzogen wird, bei dem ein Kohlendioxid und Schwefelverbindungen, insbesondere Schwefelwasserstoff, enthaltendes Sauergas gebildet wird. Bei dem Verfahren werden saure Gaskomponenten zunächst mit einem geeigneten Absorptionsmittel aus dem Gasstrom entfernt und damit von einer Nutzgaskomponente getrennt. Bei der Regeneration des in einem Kreislauf geführten Absorptionsmittels werden die enthaltenen Sauergaskomponenten freigesetzt und nachfolgend einer Claus-Anlage zugeführt.

Üblicherweise wird das Claus-Verfahren derart durchgeführt, dass das Sauergas mit Luft verbrannt wird, wobei der Schwefelwasserstoff (H₂S) mit dem in der Verbrennungsluft enthaltenen Sauerstoff (O₂) zu elementarem Schwefel und Wasser (H₂O) umgesetzt wird und wobei der elementare Schwefel (S) durch nachfolgende Kühlung in Kondensatoren abgeschieden wird ("Ullmanns Enzyklopädie der technischen Chemie, Band 10, 4. Auflage 1975, Seite 594). Mit den bekannten Claus-Verfahren kann üblicherweise eine Ausbeute von bis zu 98 % erreicht werden. Um eine zusätzliche Reinigung des Restgases zu erreichen, kann dieses einem Restgasreinigungsverfahren unterzogen werden. Während der in dem Claus-Verfahren gebildete elementare Schwefel entnommen und kommerziell verwertet werden kann, wird das gereinigte Restgas üblicherweise ungenutzt an die Umgebung abgegeben.

Da Kohlendioxid als sogenanntes Klimagas zu dem globalen Treibhauseffekt beiträgt, besteht das Bedürfnis, die zusätzliche Freisetzung von Kohlendioxid zu vermeiden. Des Weiteren sind gegenwärtig auch Verfahren bekannt, die große Mengen an Kohlendioxid als Prozessgas benötigen. So kann Kohlendioxid beispielsweise bei der Ölförderung zu einer Erhöhung der Ausbeute eingesetzt werden, wobei Kohlendioxid in ein Ölreservoir injiziert wird ("Enhanced Oil Recovery" EOR). Sowohl für die Sequestrierung von Kohlendioxid zur Emissionsvermeidung als auch für die technische Nutzung muss das Kohlendioxid üblicherweise mit einem erheblichen Aufwand von weiteren Komponenten, beispielsweise Stickstoff getrennt werden.

Die Druckschrift EP 0 059 412 A2 betrifft ein Verfahren zur Regelung der Ballastgasmenge bei einem Verbrennungsprozess, insbesondere bei dem Betrieb einer Claus-Anlage, wobei das gebildete Restgas in üblicher Weise an die Umgebung abgegeben wird. Um eine optimale Verbrennung zu erreichen, ist vorgesehen, Luft und technisch reinen Sauerstoff zuzuführen, wobei das Verhältnis von Luft und technisch reinem Sauerstoff an den jeweils vorliegenden Inertgasanteil in dem Brenngas angepasst wird. Der Begriff technisch reiner Sauerstoff bezieht sich auf ein Gas, welches zum größten Teil aus Sauerstoff besteht und in einem üblichen großtechnischen Gewinnungsverfahren gebildet ist. Die Reinheit beträgt üblicherweise mehr als 90 %, bei kryogenen Zerlegungsverfahren typischerweise zumindest 98 %.

Aus dem Aufsatz von H. Fischer in Chemie-Ing.-Techn. 39 (1967), Seite 515 bis 520 ist des Weiteren bekannt, bei einem Anteil des Schwefelwasserstoffes zwischen 20 bis etwa 5 Vol.-% einer Claus-Anlage technisch reinen Sauerstoff für die Umsetzung des Sauergases zuzuführen, um eine ausreichend hohe Verbrennungstemperatur zu erreichen. Das Restgas wird auch dabei in üblicher Weise als Abgas freigesetzt.

In EP 1914 294 A1 ist ein gattungsgemäßes Verfahren zur Entfernung von Schwefelkomponenten, beispielsweise Schwefelwasserstoff und Mercaptanen, aus Erdgas beschrieben. Zur Entfernung von Schwefelwasserstoff und Kohlendioxid erfolgt zunächst eine Wäsche des Erdgases, woraufhin eine Umwandlung der Mercaptane in Schwefelwasserstoff in einem möglichst großen Gasvolumen erfolgt. Kohlendioxid und Schwefelwasserstoff werden anschließend einer Claus-Anlage zugeführt, in der dann Schwefel gewonnen wird. Das aus dem Claus-Reaktor austretende Restgas kann in einem SCOT^{®}-Prozess weiterbehandelt werden, um den Schwefelgehalt des Restgases weiter zu senken.

In WO 2008/103467 A1 ist ein Verfahren beschrieben, mit dem Wasserstoff und Kohlendioxid aus einem Synthesegasstrom gewonnen werden können. Bei diesem Verfahren wird in einem ersten Schritt Schwefelwasserstoff und in einem zweiten Schritt Kohlendioxid aus dem Gasgemisch entfernt. Hierzu werden unterschiedliche Absorber eingesetzt. Grundsätzlich ist es dabei möglich, dass der entnommene Schwefelwasserstoff zur Schwefelgewinnung eingesetzt wird.

Aus US 5,628,977 ist ein Verfahren zur Entschwefelung von schwefelwasserstoffhaltigen Abgasen bekannt. Ein Großteil des Schwefelwasserstoffs wird in einer Claus-Anlage aus den Abgasen entfernt. Das die Claus-Anlage verlassende Gas enthält beispielsweise wegen unvollständiger Verbrennung Schwefelwasserstoff, Blausäure, Ammoniak, Carbonylverbindungen, Phenole und andere Kohlenwasserstoffe. Um die Umweltbelastung zu verringern, wird vorgeschlagen, den Brennwert der in dem Restgas vorhandenen Gasen, insbesondere Kohlenmonoxid, Wasserstoff, Schwefelwasserstoff, Schwefeldämpfen und organischen Verbindungen, durch eine Verbrennung zu nutzen. Das bei dem Verbrennungsprozess entstehende Schwefeldioxid wird rezykliert und der Claus-Anlage zugeführt.

EP 0 672 618 A1 betrifft ein Verfahren zur Gewinnung von elementarem Schwefel aus einem Schwefelwasserstoff enthaltenden Gasgemisch. Gemäß dem beschriebenen Verfahren ist es möglich, schwefelhaltige Kohlenstoffverbindungen mittels Hydrolyse in Schwefelwasserstoff umzuwandeln. In einem thermischen Teil einer Claus-Anlage wird Schwefelwasserstoff mit Luftsauerstoff zu Schwefeldioxid umgesetzt, woraufhin in dem katalytischen Teil eine Synproportionierung von Schwefelwasserstoff mit dem erzeugten Schwefeldioxid zu elementarem Schwefel und Wasser erfolgt. Um Umweltbelastungen durch austretenden bzw. freigesetzten Schwefelwasserstoff zu verhindern, wird das die Claus-Anlage verlassende Gas einer Nachverbrennung unterzogen. Auf diese Weise wird der bei der Synproportionierung nichtverbrauchte Schwefelwasserstoff zu Schwefeldioxid umgesetzt, dessen Toxizität wesentlich unkritischer als die von Schwefelwasserstoff ist.

Der Erfindung liegt die Aufgabe zugrunde, ein Verfahren mit den eingangs beschriebenen Merkmalen anzugeben, welches bei einem geringen Aufwand eine Nutzung des in dem Sauergas enthalten Kohlendioxids ermöglicht.

Die Aufgabe wird erfindungsgemäß durch ein Verfahren gemäß Patentanspruch 1 gelöst. Gemäß der vorliegenden Erfindung sollen die in dem Sauergas enthaltene Schwefelkomponentenfraktion und die Kohlendioxidfraktion in möglichst reiner Form getrennt gewonnen werden. Mit den aus dem Stand der Technik bekannten Verfahren ist eine solche weitgehend reine Trennung nur unter sehr hohem Aufwand möglich, da die bekannten Absorptionsprozesse Schwefelkomponenten einerseits und Kohlendioxid andererseits nicht in einer hohen Selektivität aus einem Gasgemisch getrennt abtrennen können. Vergleichsweise einfach ist dagegen die gemeinsame Abtrennung von Kohlendioxid und Schwefelkomponenten in einer gemeinsamen Sauergasfraktion, die zur weiteren Verarbeitung einer Claus-Anlage zugeführt wird und die dann im Rahmen des erfindungsgemäßen Verfahrens kostengünstig in elementaren Schwefel und Kohlendioxid umgewandelt wird. Zur gemeinsamen Abtrennung von Kohlendioxid und Schwefelkomponenten können zum Beispiel chemisch und physikalisch wirkende Waschverfahren angewandt werden. Erfindungsgemäß wird der Claus-Anlage ausschließlich technisch reiner Sauerstoff als Sauerstoff enthaltendes Reaktionsgas zugeführt. Dadurch wird in besonders vorteilhafter Weise erreicht, dass bei der Aufbereitung des Sauergases keine Inertgasanteile zugeführt werden, die nachträglich mit einem großen Aufwand von dem Kohlendioxid getrennt werden müssen.

Um Anteile von Wasserstoff und/oder Kohlenmonoxid zu Wasser bzw. Kohlendioxid umzusetzen ist erfindungsgemäß eine Nachverbrennung des Restgases mit technisch reinem Sauerstoff, die vorzugsweise katalytisch erfolgt, vorgesehen. Sofern das ursprünglich der Claus-Anlage zugeführte Sauergas im Wesentlichen aus Schwefelverbindungen und Kohlendioxid besteht, enthält das Restgas nach der Durchführung eines Restgasreinigungsverfahrens und einer Nachverbrennung zur Entfernung von Wasserstoff und/oder Kohlenmonoxid nur noch nahezu reines Kohlendioxid und Wasserdampf, der bei der weiteren Behandlung des Restgases auskondensiert wird. Des Weiteren können auch bekannte Verfahren zur Gastrocknung angewandt werden um den Wassergehalt weiter zu reduzieren. Das nach der Entfernung von Wasser im Wesentlichen aus Kohlendioxid bestehende Restgas wird zur Sequestrierung, d.h. insbesondere zur Einlagerung in geologischen Formationen wie Erdöllagerstätten, Erdgaslagerstätten, Äquiferen, Kohleflözen oder in der Tiefsee, oder zur technischen Nutzung üblicherweise komprimiert oder verflüssigt, wobei insbesondere auch eine Zwischenlagerung oder ein Transport des Kohlendioxids vorgesehen sein können. Abhängig von der vorgesehenen weiteren Verwendung des Kohlendioxids beträgt die Reinheit im gasförmigen Zustand zumindest 80 Vol.-%, bevorzugt 90 Vol.-%, besonders bevorzugt 95 Vol.-%.

Im Rahmen einer bevorzugten Ausgestaltung des erfindungsgemäßen Verfahrens ist vorgesehen, dass bei Überschreiten einer maximal zulässigen Brenntemperatur innerhalb der Brennkammer der Claus-Anlage abströmseitig ein Anteil des prozesseigenen Restgases entnommen und zur Kühlung gemeinsam mit dem technisch reinen Sauerstoff der Brennkammer zugeführt wird. Durch die beschriebenen Maßnahmen ist eine präzise Steuerung des Brennvorganges möglich, ohne dass die Aufkonzentration von Kohlendioxid beeinträchtigt wird.

Bei einem Sauergas, welches im Wesentlichen aus Kohlendioxid und Schwefelkomponenten, insbesondere H₂S, COS und Mehrkaptanen, besteht kann so eine weitgehend vollständige Separation erreicht werden. Der elementare Schwefel und das Wasser, die in dem Claus-Prozess durch die Reaktion der Schwefelkomponenten mit dem Sauerstoff gebildet werden, werden aus dem Restgas herauskondensiert, so dass eine starke Anreicherung des Kohlendioxids erfolgt. Um noch verbleibende Reste von Schwefelverbindungen zumindest weitgehend zu entfernen, kann das die Claus-Anlage verlassende Restgas einem nachgeordneten Gasreinigungsverfahren unterzogen werden. So kann beispielsweise eine Hydrierung vorgesehen sein, bei der die neben H₂S in dem Restgas enthaltenden Schwefelkomponenten zu H₂S hydriert werden. Das Restgas wird nachfolgend gequencht und einer selektiven Wäsche, vorzugsweise mit einem chemischen Absorptionsmittel, unterzogen, wobei das noch in dem Restgas vorhandene H₂S weitgehend entfernt wird. Nach der zusätzlichen Entfernung von Schwefelkomponenten besteht das Restgas im Wesentlichen aus Kohlendioxid, Wasser und geringen Anteilen von Kohlenmonoxid und Wasserstoff. Als Restgasreinigungsverfahren ist beispielsweise das SCOT^{®}-Verfahren (**S**hell **C**laus **O**ff gas **T**reatment) geeignet.

Zusätzlich zu einer Nachverbrennung von Wasserstoff und/oder Kohlenmonoxid mit technisch reinem Sauerstoff kann auch eine Entfernung der genannten Komponenten durch Druck- und/oder Temperaturänderungen des Restgases erreicht werden. So kann beispielsweise vorgesehen sein, das Restgas nach der Durchführung eines Restgasreinigungsverfahrens mittels eines Gaskühlers oder einer Quenchkolonne vom größten Teil des Wasserdampfes zu befreien und danach zur Verflüssigung des Kohlendioxides zu komprimieren. Kohlenmonoxid und Wasserstoff können dann in einer geeigneten Trenneinrichtung aus dem verflüssigten Kohlendioxid entfernt werden.

Sofern das der Claus-Anlage zugeführte Sauergas neben Kohlendioxid und Schwefelkomponenten noch Inertgasanteile enthält, kann zumindest der Aufwand einer nachträglichen Trennung gering gehalten werden, da bei dem erfindungsgemäßen Verfahren zur Entschwefelung keine zusätzlichen Inertgaskomponenten zugeführt werden.

Die erfindungsgemäß vorgesehene Verwendung von technisch reinem Sauerstoff ermöglicht auf besonders vorteilhafte Weise bei einer vorgegebenen Menge an Sauergas auch eine kleinere Dimensionierung der Claus-Anlage und einer optional vorgesehen Vorrichtung zur Restgasreinigung, so dass die für die Bereitstellung des technisch reinen Sauerstoffs erforderlichen Zusatzkosten ausgeglichen werden können.

Eine für die Durchführung des Verfahrens geeignete Vorrichtung umfasst neben den üblichen Komponenten insbesondere eine Verbindungsleitung, die einen Einlass der Brennkammer der Claus-Anlage mit einer der Claus-Anlage nachgeordneten Gasführung oder einem der Claus-Anlage nachgeordneten Vorratsbehälter für das Restgas verbindet. Des Weiteren ist an der Verbindungsleitung eine Steuereinrichtung vorgesehen, um an dem Einlass die Beimischung des prozesseigenen Restgases bedarfsgerecht zu steuern.

## Patentansprüche

1. Verfahren zur Entschwefelung,
wobei ein Gasgemisch zur Separation saurer Gaskomponenten einem Abtrennprozess unterzogen wird, bei dem ein Kohlendioxid und Schwefelverbindungen, insbesondere Schwefelwasserstoff, enthaltendes Sauergas gebildet wird,
wobei das Sauergas zur Abscheidung elementaren Schwefels einer Claus-Anlage zugeführt wird, der als Sauerstoff enthaltendes Reaktionsgas ausschließlich technisch reiner Sauerstoff zugeführt wird, und
wobei der Claus-Anlage nachgelagert Kohlendioxid in einer Reinheit von zumindest 80 Vol.-% entnommen wird, die eine unmittelbare Sequestrierung oder technische Nutzung ermöglicht,
**dadurch gekennzeichnet, dass** das die Claus-Anlage verlassende Restgas zur Entfernung von Wasserstoff und Kohlenmonoxid einer Nachverbrennung mit technisch reinem Sauerstoff unterzogen wird und dass Wasserdampf aus dem Restgas auskondensiert wird.

2. Verfahren nach Anspruch 1, **dadurch gekennzeichnet, dass** eine katalytische Nachverbrennung des Restgases durchgeführt wird.

3. Verfahren nach Anspruch 1 oder 2, **dadurch gekennzeichnet, dass** bei Überschreiten einer maximal zulässigen Brenntemperatur in einer Brennkammer der Claus-Anlage eine Beimischung eines bezogen auf die Claus-Anlage abströmseitig entnommenen Anteils des prozesseigenen Restgases zugeführt wird.

4. Verfahren nach einem der Ansprüche 1 bis 3, **dadurch gekennzeichnet, dass** bei dem Abtrennprozess alle Sauergaskomponenten aus dem Gasgemisch gemeinsam abgetrennt und in einer gemeinsamen Fraktion als Sauergas gewonnen werden.

5. Verfahren nach einem der Ansprüche 1 bis 4, **dadurch gekennzeichnet, dass** der Abtrennprozess das Waschen des Gasgemisches mit einem physikalischen und/oder chemischen Absorptionsmittel und die Regeneration des Absorptionsmittels umfasst.

6. Verfahren nach einem der Ansprüche 1 bis 5, **dadurch gekennzeichnet, dass** das die Claus-Anlage verlassende Restgas einem Restgasreinigungsverfahren, insbesondere einem Scot^{®}-Verfahren unterzogen wird, um Reste von Schwefelverbindungen zumindest weitgehend zu entfernen.

7. Verfahren nach einem der Ansprüche 1 bis 6, **dadurch gekennzeichnet, dass** das Restgas zur weiteren Nutzung komprimiert wird.

## Claims

1. A method for desulphurisation,
wherein a gas mixture is subjected to a separating process for the separation of acid gas components, during which an acid gas is formed, which contains a carbon dioxide and sulphurous compounds, in particular hydrogen sulphide,
wherein the acid gas is fed to a Claus plant for separating the elementary sulphur, with exclusively technically pure oxygen being supplied to the Claus plant as an oxygen-containing reaction gas, and wherein carbon dioxide with a purity of at least 80 % by volume is withdrawn downstream of the Claus plant, permitting an immediate sequestration or technical use,
**characterised in that** the residual gas leaving the Claus plant is subjected to post-combustion with technically pure oxygen in order to remove hydrogen and carbon monoxide and **in that** water vapour is condensed out of the residual gas.

2. The method according to claim 1, **characterised in that** catalytic post-combustion of the residual gas is carried out.

3. The method according to claim 1 or 2, **characterised in that** in case a maximum admissible combustion temperature is exceeded in a combustion chamber of the Claus plant, an admixture is added which is a proportion of the process-related residual gas withdrawn from the outflow side relative to the Claus plant.

4. The method according to one of claims 1 to 3, **characterised in that** during the separating process all acid gas components are separated together out of the gas mixture and recovered in a joint fraction as an acid gas.

5. The method according to one of claims 1 to 4, **characterised in that** the separating process encompasses washing the gas mixture using a physical and/or chemical absorption agent and the regeneration of the absorption agent.

6. The method according to one of claims 1 to 5, **characterised in that** the residual gas leaving the Claus plant is subjected to a residual gas cleaning process, in particular a Scot® process, in order to at least substantially remove any residues of sulphur compounds.

7. The method according to one of claims 1 to 6, **characterised in that** the residual gas is compressed for further usage.

## Revendications

1. Procédé pour la désulfurisation,
dans lequel un mélange gazeux est soumis à un processus de séparation pour la séparation de composants gazeux acides où un gaz acide contenant du dioxyde de carbone et des composés de souffre, en particulier de l'hydrogène sulfuré, est formé,
dans lequel le gaz acide est amené à une installation Claus, pour l'extraction de souffre élémentaire, à laquelle on amène, en tant que gaz de réaction contenant de l'oxygène, exclusivement de l'oxygène techniquement pur, et
dans lequel on prélève, en aval de l'installation Claus, du dioxyde de carbone d'une pureté d'au moins 80 % en volume, laquelle permet une séquestration directe ou une utilisation technique,
**caractérisé en ce que** le gaz résiduel quittant l'installation Claus est soumis à une post-combustion avec de l'oxygène techniquement pur pour l'élimination d'hydrogène et de monoxyde de carbone, et **en ce que** de la vapeur d'eau est éliminée par condensation du gaz résiduel.

2. Procédé selon la revendication 1, **caractérisé en ce que** l'on réalise une post-combustion catalytique du gaz résiduel.

3. Procédé selon la revendication 1 ou 2, **caractérisé en ce qu'**en cas de dépassement par le haut d'une température de combustion maximalement admissible dans une chambre de combustion de l'installation Claus, on amène une addition d'une part du gaz résiduel propre au processus prélevée du côté d'écoulement par rapport à l'installation Claus.

4. Procédé selon l'une des revendications 1 à 3, **caractérisé en ce que**, lors du processus de séparation, tous les composants de gaz acide sont séparés en commun du mélange gazeux et sont obtenus en tant que gaz acide dans une fraction commune.

5. Procédé selon l'une des revendications 1 à 4, **caractérisé en ce que** le processus de séparation comprend le lavage du mélange gazeux avec un absorbant physique et/ou chimique et la régénération de l'absorbant.

6. Procédé selon l'une des revendications 1 à 5, **caractérisé en ce que** le gaz résiduel quittant l'installation Claus est soumis à un procédé de nettoyage de gaz résiduel, en particulier à un procédé Scot^{®} pour éliminer au moins en grande partie des résidus de composés de souffre.

7. Procédé selon l'une des revendications 1 à 6, **caractérisé en ce que** le gaz résiduel est comprimé pour l'utilisation ultérieure.
